# EUROPÄISCHE PATENTSCHRIFT

(11) **EP 0 717 725 B1**
(45) Veröffentlichungstag und Bekanntmachung des Hinweises auf die Patenterteilung: **19.03.1997**
(21) Anmeldenummer: 94926154.9
(22) Anmeldetag: 05.08.1994
(51) Int. Cl.: C03B 37/05

(54) **Vorrichtung zum Erzeugen von Mineralfasern aus einer Schmelze**
Device for the production of mineral fibres from a melt
Dispositif permettant de produire des fibres minérales à partir d'une matière en fusion

(30) Priorität: 11.09.1993 DE 4330841
(43) Veröffentlichungstag der Anmeldung: 26.06.1996
(73) Patentinhaber: Deutsche Rockwool Mineralwoll-GmbH, 45966 Gladbeck (DE)
(72) Erfinder: KLOSE, Gerd-Rüdiger, D-46886 Dorsten (DE)
(74) Vertreter: Wanischeck-Bergmann, Axel, Dipl.-Ing.
(86) Internationale Anmeldenummer: EP9402604
(87) Internationale Veröffentlichungsnummer: WO9507243

(56) Entgegenhaltungen:
- WO-A-91/10626
- BE-A- 451 182
- DE-C- 919 096
- US-A- 2 884 659

## Beschreibung

Die Erfindung bezieht sich auf eine Vorrichtung zum Erzeugen von Mineralfasern aus einer Schmelze mit einem um eine Horizontale drehenden Rotor, auf dessen äußere Oberfläche die Schmelze aufgegeben wird.

Bei einer derartigen zuvor genannten und aus dem Stand der Technik bekannten Vorrichtung besteht der um eine horizontale Achse drehende Rotor aus einer Zylinderwalze, die im Verhältnis zum Durchmesser meist recht kurz ist, d. h. eine scheibenförmige Gestalt aufweist. Die Dispergierung bzw. Umformung beispielsweise einer Silikatschmelze in Fasern erfolgt dadurch, daß ein Strahl der Silikatschmelze unter der Schwerkraft von außen auf die Zylinderwalze trifft. Die Schmelze wird dabei auf den Umfang der Walze geleitet, verteilt sich dort in einer dünnen Schicht bzw. wird mehr oder weniger über die Manteloberfläche geleitet. Es entsteht dabei meist eine unterschiedliche Schichtdicke der Schmelze, und zwar einerseits bewirkt durch die Abkühlung der Schmelze in Kontakt mit der Walze als auch andererseits durch Einfluß der Umgebungsluft im Nahbereich auf die äußere Grenzschicht der Schmelze. Unter der Wirkung der Zentrifugalkraft und eines senkrecht zur Zentrifugalkraft bzw. im wesentlichen achsparallel angelegten Luftstromes lösen sich Teile der Schmelze aus der gebildeten flüssigen Schmelzeschicht. Das Ablösen von Teilen der Schmelze wird noch unregelmäßig durch Rauhigkeiten des Untergrundes bzw. der Oberfläche der Walze oder durch Unwucht der Walze beeinflußt. Dabei entstehen sowohl die Mineralfasern mit den gewünschten Durchmessern und Längen als auch ungewünschte kugelförmige oder sonstige stengelförmige Teilchen. Erfahrungsgemäß beträgt die Ausbeute an Fasern auf diese Weise weniger als etwa 50 bis 60% bezogen auf die Masse der eingesetzten Schmelze.

Die Faserbildungsleistung einer einzelnen zylindrischen Walze ist verhältnismäßig niedrig, weil auch nur ein verhältnismäßig kleiner Bereich des Mantels der Walze genutzt wird. Es ist daher bekannt, mehrere Zylinderwalzen, zumeist vier Walzen, in einer Zerfaserungsmaschine zusammenzufassen. Die einzelnen Zylinderwalzen sind dann kaskadenartig zueinander angeordnet. Der Strahl der Schmelze wird so durch die Kaskade geleitet, daß jede Walze einen Teil der Schmelze übernimmt und zu Fasern verarbeitet. Ein jeweiliger Überschuß der Schmelze wird von einer Walze auf die nächste durch Zentrifugalkraft weitergegeben. Die mit zunehmender Abkühlung der Schmelze ansteigende Viskosität wird durch die Erhöhung der Umfangsgeschwindigkeit sowie durch eine differenzierte Kühlung der Walzen zu kompensieren versucht.

Es wird ferner vorgeschlagen, in die Oberfläche der Walzen konzentrische Rillen einzufräsen, die einen erhöhten Wärmeaustausch erlauben sowie der sich abkühlenden Schmelze einen besseren Halt geben. Bei einer zu starken Abkühlung der Schmelze wird die Grenzschicht zu der Walzenoberfläche instabil und löst sich regelmäßig von der Walzenoberfläche. Dieser meist periodisch auftretende Vorgang stört nicht nur den Faserbildungsprozeß, sondern ist auch mit nicht zu vernachlässigen Materialverlusten verbunden.

Bekannt ist ferner, Mineralfasern aus einer silikatischen Schmelze dadurch herzustellen, daß die Schmelze auf die Innenseite eines rotierenden Hohlzylinders geleitet wird. In der Wandung dieses Hohlzylinders befinden sich zahlreiche Öffnungen, durch die die im Innern des Hohlzylinders mehr oder weniger gleichmäßig verteilte Schmelze unter Faserbildung und unter der Wirkung der Zentrifugalkraft nach außen austritt. Durch einen parallel zu der Längsachse des Hohlzylinders über den Mantel des Hohlzylinders geleiteten Heißluftstrom wird die Faserbildung unterstützt und kontrolliert.

Der Durchmesser derartiger bekannter Rotationskörper beträgt in der Größenordnung weniger als 450 mm und die Umdrehungszahlen betragen weniger als 2000 U/min.

Aus dem Dokument WO-A-91 10 626 ist eine Vorrichtung mit den Merkmalen des Oberbegriffes des Anspruchs 1 der vorliegenden Erfindung bekannt.

Die zuvor erläuterten Vorrichtungen bzw. Zerfaserungs-aggregate sind in der Praxis seit Jahrzehnten im Einsatz, und es hat nicht an Vorschlägen und Versuchen gefehlt, die Vorrichtungen dahingehend zu verbessern, daß der Anteil an Abfall in Form von Perlen, sogenannten Nestern oder grobstückigen Keilen verringert und der Faseranteil erhöht wird. Neuerdings sind aber in der Praxis höhere Anforderungen an die Faserqualität gestellt worden. Es wird angestrebt, daß Mineralwolle-Dämmstoffe zu einem möglichst hohen Prozentsatz aus glasig erstarrten Einzelfasern mit mittleren Durchmessern von etwa 4 bis 5 µm bestehen. Im Rahmen der Erfindung wurde erkannt, daß zwar feinere Fasern mit einem niedrigeren mittleren Durchmesser die Dämmwirkung des Mineralwolle-Dämmstoffes erhöhen, daß jedoch der Anteil feinerer Fasern beispielsweise mit einem mittleren Durchmesser von weniger als 2 µm unerwünscht ist, weil man vermeiden wird, daß aus den Dämmstoffen herausgelöste Fasern einatmungsfähig sind. Es bestehen jedenfalls Befürchtungen, daß Bedienungspersonen, die tagtäglich mit Dämmstoffen umgehen, die aus äußerst feinen Fasern bestehen, gesundheitliche Schäden davontragen könnten. Aus diesem Grunde könnte der Fachmann der Tendenz nachgehen, nur noch gröbere Fasern zu erzeugen. Dieser Weg führt aber auch nicht weiter, weil gröbere Fasern die Wärmeleitfähigkeit des Dämmstoffes vergrößern, die Dämmwirkung infolgedessen verringert wird. Außerdem werden gröbere Fasern spröder und neigen vor allem bei mechanischer Belastung zum Zerbrechen und die Dämmstoffe als Endprodukte werden auch weniger hautfreundlich für die Bedienungspersonen.

Der Erfindung liegt somit die Aufgabe zu Grunde, eine Vorrichtung zu schaffen, mit der es möglich ist, das Faserdurchmesserspektrum so eng als möglich in dem angestrebten mittleren Faserdurchmesserbereich zu halten und gleichzeitig den Anteil an Abfall wesentlich zu verringern.

Ausgehend von der zu Anfang angegebenen Vorrichtung wird die Aufgabe erfindungsgemäß durch Anspruch 1 gelöst, insbesondere eine Vorrichtung bei der der Durchmesser des Rotors von der Aufgabezone über die Verteilungszone bis zur Faserbildungszone vergrößert ist.

Auf diese Weise wird eine wirksame Trennung der Oberflächenbereiche in die drei vorgenannten Zonen erreicht, und es wird ein zu frühes Ablösen der Schmelze von der Rotoroberfläche vermieden und eine zu frühe Zerfaserung unterbunden, d. h. daß die Zerfaserung erst in der Faserbildungszone stattfindet, nachdem sich die Schmelze in dieser Zone gleichmäßig verteilt hat.

Vorteilhafte Ausgestaltungen der erfindungsgemäßen Vorrichtung ergeben sich aus den Unteransprüchen, die nachfolgend noch im einzelnen erläutert werden.

In der Zeichnung sind Ausführungsbeispiele der erfindungsgemäßen Vorrichtung im Schema dargestellt, und zwar zeigen
Fig. 1 einen Vertikalschnitt durch die obere Hälfte eines Rotors,
Fig. 2 eine Außenansicht auf einen Teil der Rotoroberfläche des Rotors gemäß Fig. 1,
Fig. 3 einen vertikalen Längsschnitt durch eine Rotorwandung in einer anderen Ausführung,
Fig. 4 einen vertikalen Längsschnitt durch einen Teil der Rotorwandung in der Faserbildungszone in einer anderen Ausgestaltung,
Fig. 5 einen Teilvertikalschnitt durch die Wandung eines Rotors in einer anderen Ausgestaltung,
Fig. 6 wiederum einen Teilvertikalschnitt entsprechend den Fig. 3 und 5, jedoch wiederum in einer anderen Ausgestaltung,
Fig. 7 eine schematische Darstellung eines Rotors mit Antrieb durch eine Gasturbine,
Fig. 8 einen Teilvertikalschnitt durch den Rotor gemäß Fig. 7, in vegrößertem Maßstab und
Fig. 9 eine Teilaußenansicht des Rotors gemäß Fig. 7 oder 8.

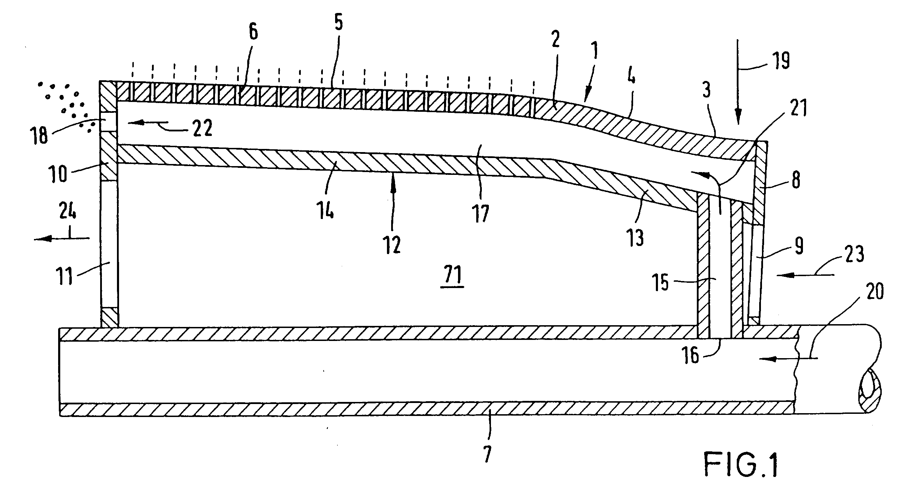

Fig. 1 zeigt ein Ausführungsbeispiel eines Rotors 1 im vertikalen Längsschnitt, wobei nur die obere Hälfte des Rotors dargestellt ist. Die untere Hälfte ist der Einfachheit halber weggelassen worden, weil sie rotationssymmetrisch in gleicher Weise wie die obere Hälfte ausgebildet ist. Der Rotor 1 besitzt einen Außenmantel 2, auf dem in axialer Richtung gesehen drei nebeneinander liegende Zonen gebildet werden, nämlich eine Aufgabezone 3 für die Zuführung der Schmelze, wie vereinfacht durch die Pfeilrichtung 19 angegeben ist. An die Aufgabezone 3 schließt sich eine Verteilungszone 4 an und die Verteilungszone 4 geht über in eine Faserbildungszone 5. Während die Aufgabezone und die Verteilungszone vollmantelig ausgebildet sind, ist die Faserbildungszone 5 auf dem Umfang mit zahlreichen Öffnungen 6 versehen. Der Durchmesser des Rotors 1 ist von der Aufgabezone 3 über die Verteilungszone 4 bis hin zur Faserbildungszone 5 vergrößert. Das hat zur Folge, daß die aufgebrachte Schmelze im Bereich der Aufgabezone 3 nur einer so geringen Fliehkraft unterworfen ist, daß sie sich noch nicht frühzeitig von der Oberfläche ablösen kann, sondern zunächst in die daneben befindliche Verteilungszone herüberfließt. Schließlich gelangt die Schmelze von hier aus in die Faserbildungszone 5, wo sie sich zunächst möglichst gleichmäßig verteilt aber dann auf Grund des vergrößerten Durchmessers des Rotors in diesem Bereich einer so hohen Fliehkraft unterworfen wird, daß die Schmelze in Form von Fasern nach außen geschleudert wird, wobei die Faserbildung jeweils an den Rändern der Öffnungen 6 entsteht.

Vorteilhafterweise ist der Umfang des Rotors 1 flaschenförmig gestaltet, so daß der Flaschenhals die Aufgabezone 3 bildet, an die sich die Verteilungszone 4 mit entsprechender Erweiterung anschließt und der Flaschenkörper die Faserbildungszone 5 aufweist. Die Faserbildungszone 5 kann im Grenzfall zylindrisch ausgebildet sein. Um aber eine bessere Verteilung der Schmelze über die Faserbildungszone zu erreichen, ist es jedoch zweckmäßig, wenn sich der Durchmesser vergrößert, d. h. wenn die Faserbildungszone leicht kegelstumpfförmig ausgebildet ist.

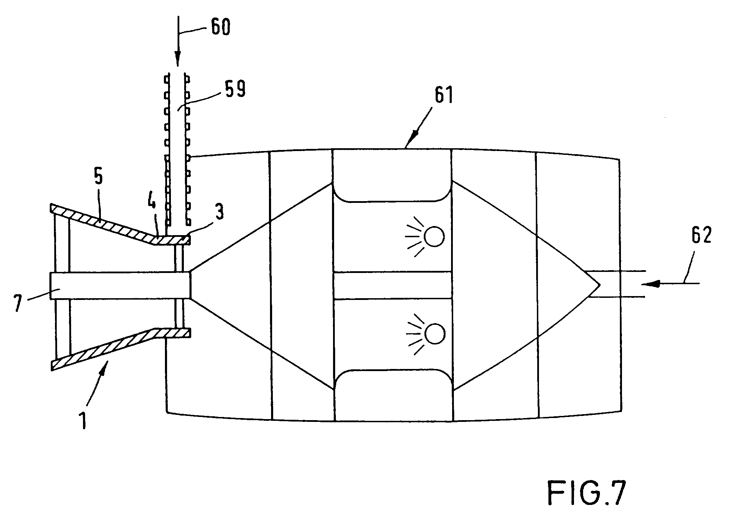

Der Rotor 1 kann aber auch gemäß der weiter unten erläuterten Fig. 7 in axialer Richtung von der Aufgabezone 3 bis zum Ende der Faserbildungszone 5 kegelstumpfförmig erweitert sein. Eine weitere Möglichkeit besteht darin, daß der Außenmantel 2 des Rotors aus zwei zusammengefügten kegelstumpfförmigen Hohlkörpern besteht.

Das Verhältnis der Durchmesser, somit der Anstieg der Außenfläche des Außenmantels 2 und in der Folge die durch die Rotation bewirkte Vortriebskraft auf die Schmelze sind von der gewünschten Leistung des Zerfaserungsaggregats und der Viskosität-Temperatur-Relation abhängig. Die erfindungsgemäße Gestaltung des Außenmantels ist jedenfalls so getroffen, daß ein zu frühes Ablösen der Schmelze und eine zu frühe Zerfaserung unterbunden wird.

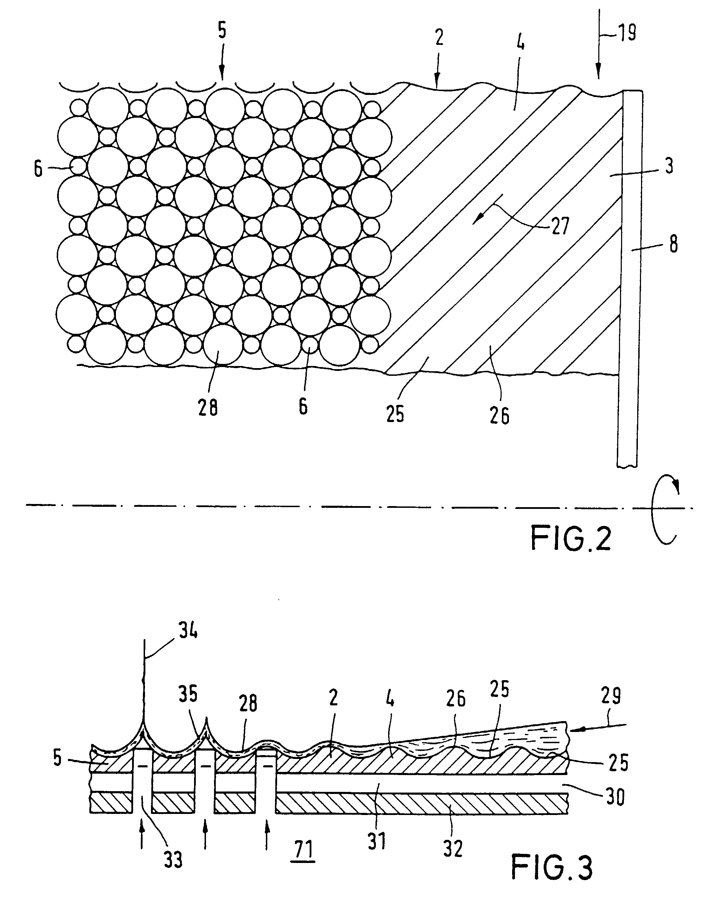

Eine vorteilhafte Ausgestaltung der Erfindung besteht darin, daß der Rotor auf der Oberfläche spiralförmige Führungsrinnen 25 aufweist, und zwar bei dem Ausführungsbeispiel gemäß Fig. 2 über die gesamten Umfangsbereiche der Aufgabezone 3 und der Verteilungszone 4 verteilt. Der Anstieg der Führungsrinnen 25 beträgt vorteilhafterweise etwa 40° bis 60° zur Rotorachse. Die Führungsrinnen 25 und die zwischen den Führungsrinnen gebildeten Stege 26 sind zueinander abgerundet, wie aus Fig. 3 ersichtlich ist. Fig. 3 macht ferner deutlich, daß die Schmelze 29 in den spiralförmigen Führungsrinnen schnell in die Faserbildungszone 5 gelangt. Die Wirkungsweise der Führungsrinnen 25 beruht auf der Tatsache, daß eine Schmelze auf einer konkaven Oberfläche nicht nur besser hält, sondern auch eine zu frühe Zerfaserung der Schmelze vermieden wird. Hierzu tragen auch die abgerundeten Übergänge zwischen den Führungrinnen 25 und den dazwischen befindlichen Stegen 26 bei. Die Fließrichtung der Schmelze in den Führungsrinnen ist in Fig. 2 mit dem Pfeil 27 verdeutlicht.

Eine weitere vorteilhafte Ausgestaltung der erfindungsgemäßen Vorrichtung ist aus den Fig. 2 bis 6 ersichtlich, und zwar weist die Faserbildungszone 5 zwischen den Öffnungen 6 kalottenförmige Vertiefungen 28 auf. Die kalottenförmigen Vertiefungen 28 sind dicht nebeneinander auf dem gesamten Umfang des Rotors im Bereich der Faserbildungszone 5 verteilt. Die Wirkungsweise dieser kalottenförmigen Vertiefungen 28 besteht wiederum darin, daß die Schmelze auf negativ gekrümmten Oberflächen eine geringere Oberflächenenergie aufweist und sie somit auf konkaven Oberflächen auch besser haftet. Die Schmelze läßt sich auf einer derartigen Oberfläche in einer insgesamt dünnen Schicht gleichmäßig verteilen.

Vorteilhaft weisen die kalottenförmigen Vertiefungen 28 unterschiedliche Tiefen derart auf, daß sie mit größeren Abständen von der Aufgabezone 3 zunehmend flacher gestaltet sind. Neben den unterschiedlichen Tiefen können die kalottenförmigen Vertiefungen auch unterschiedliche Größen besitzen. Diese Abmessungen der Vertiefungen können an die Beladung der Oberfläche durch die Schmelze und an die Viskosität der Schmelze angepaßt werden. Das bedeutet, daß diese Einflußfaktoren bereits bei der Gestaltung der Oberfläche der Faserbildungszone 5 berücksichtigt werden können. Daraus folgt auch, daß die kalottenförmigen Vertiefungen, wie gesagt, mit größeren Abständen von der Aufgabezone zunehmend flacher gestaltet sein können.

Wie bereits oben ausgeführt wurde, ist die Faserbildungszone 5 auf dem Umfang mit zahlreichen öffnungen versehen, die sich, wie insbesondere die Fig. 2 und 3 verdeutlichen, zwischen den kalottenförmigen Vertiefungen 28 befinden. Fig. 3 zeigt im linken Teil die prinzipielle Wirkungsweise dieser Öffnungen. Da die Viskoseschmelze über der öffnung keine Verbindung mit der metallischen Oberfläche des Rotors mehr hat, wird sie unter der Wirkung der Fliehkraft nach außen gezogen. Die Schmelze wölbt sich hierbei aus und bildet somit den Anfang der Faserbildung. Das Nachfließen der Schmelze und damit eine kontinuierliche Faserbildung werden durch die am Rand jeder kalottenförmigen Vertiefung 28 ohnehin nach außen gerichtete Bewegung der Schmelze unterstützt. Der Durchmesser der öffnungen 6 ist wiederum auf die Menge der überströmenden Schmelze und deren Viskosität abzustimmen. Vorteilhafterweise kann der Durchmesser der Öffnungen 6 bis zu etwa 3 bis 4 mm betragen.

Fig. 1 zeigt weitere vorteilhafte Ausgestaltungen der Vorrichtung. Wie ersichtlich, ist der Rotor 1 mit seinem Außenmantel 2 auf einem Zentralrohr 7 befestigt. Ferner besitzt der Rotor 1 einen Innenmantel 12, welcher mit dem Außenmantel 2 einen Ringraum 17 begrenzt. Der Innenmantel 12 kann zweckmäßigerweise aus einem konischen Teil 13 und einem angeschlossenen zylindrischen Teil 14 bestehen. Vorteilhafterweise ist der Ringraum 17 über mindestens ein Radialrohr 15 mit dem Zentralrohr 7 verbunden, wobei das Radialrohr mit der inneren Öffnung 16 im Zentralrohr mündet. Zur besseren Verteilung des einzuführenden Mediums sind vorteilhafterweise mehrere Radialrohre 15 auf dem Umfang verteilt angeordnet. Als Medium wird bevorzugt Kühlwasser verwendet, welches in Richtung der Pfeile 20, 21 und 22 von dem Zentralrohr durch die Radialrohre und den Ringraum 17 strömt. Ein Teil des Kühlwassers dringt in die Öffnungen 6 ein, wird dort verdampft, so daß der Wasserdampf durch die zahlreichen Öffnungen nach außen tritt. Hierdurch kann der Ablösungseffekt der Schmelze und die Faserbildung begünstigt werden. Bei Verwendung von Kühlwasser ist es zweckmäßig, den Durchmesser der öffnungen 6 klein zu halten, und zwar kleiner als etwa 1 mm. Die austretenden Dampfblasen bewirken einmal ein Wegdrücken der Schmelze außerhalb der Öffnungsmündungen, zum anderen erfolgt eine schlagartige Abkühlung der Schmelze in diesem sehr eng bemessenen Bereich außerhalb der Öffnungen 6, so daß es hier zu einer punktuellen Verdichtung kommt, so daß dieser prinzipiell schwerere und viskosere punktuelle Bereich der Schmelze das Ausziehen der betreffenden Faser erleichtert.

Eine Konstruktionsvereinfachung des Rotors ergibt sich dadurch, daß der Außenmantel 2 und der Innenmantel 12 mittels Stirnscheiben 8 und 10 mit dem Zentralrohr 7 verbunden sind. Die Stirnscheibe 8 nahe der Aufgabezone 3 ist ferner mit mindestens einer Lufteintrittsöffnung 9 und die Stirnscheibe 10 am Ende der Faserbildungszone 5 mit mindestens einer Luftaustrittsöffnung 11 versehen. In Richtung der Pfeile 23 und 24 kann auf diese Weise ein Luftstrom durch den Innenraum 71 geleitet werden, der von dem Innenmantel 12 gebildet ist. Dieser Luftstrom in Richtung des Pfeiles 24 dient einmal zur Kühlung und auch zum Transport der gebildeten Fasern in axialer Richtung, wobei die Umlenkung der gebildeten Fasern in eine axiale Richtung entsprechend dem Pfeil 24 durch weitere Luftströme erfolgen kann, die außerhalb des Rotors in axialer Richtung und auf dem Umfang des Rotors verteilt zugeführt werden können.

Gemäß einer weiteren konstruktiven Ausgestaltung der Vorrichtung ist die Stirnscheibe 10 am Ende der Faserbildungszone 5 im Bereich des Ringraumes 17 mit auf dem Umfang des Ringraumes verteilten Auslaßöffnungen 18 versehen. Bei Verwendung von Kühlwasser kann aus diesen öffnungen 18 verdampfendes Kühlwasser austreten, welches auf den Faserstrom einwirkt und zur Abkühlung der Fasern beiträgt. Dem Kühlwasser kann auch ein Bindemittel beigegeben werden.

Der oben erläuterte Ringraum 17 kann wahlweise an einen offenen oder geschlossenen Kühlwasserkreislauf angeschlossen sein. Die Fig. 3 bis 6 veranschaulichen unterschiedliche konstruktive Lösungen, deren Auswahl hauptsächlich von der Art der Schmelze, der materialmäßigen Zusammensetzung, der Viskosität und der Temperatur der Schmelze abhängig ist, insbesondere welche Art von Mineralfasern erzeugt werden sollen. Man unterscheidet hier im wesentlichen zwischen unterschiedlichen Arten von Mineralfasern, die zu einem Produkt aus Steinwolle, Schlackenwolle oder Glasvollwolle verarbeitet werden.

Bei dem Ausführungsbeispiel gemäß Fig. 3 ist der Innenraum 71 des Innenmantels 32 über Luftkanäle 33 mit dem Außenmantel 2 verbunden. Die Luftkanäle 33 münden zwischen den kalottenförmigen Vertiefungen 28 in der Faserbildungszone 5. Der Ringraum 31 hat einen Kühlwasserzulauf 30. Fig. 3 zeigt ferner eine ausgezogene Mineralfaser 34 sowie die Ausbildung eines Schmelzekegels 35 über der Mündung eines Luftkanals 33 vor dem Ausziehen einer Faser.

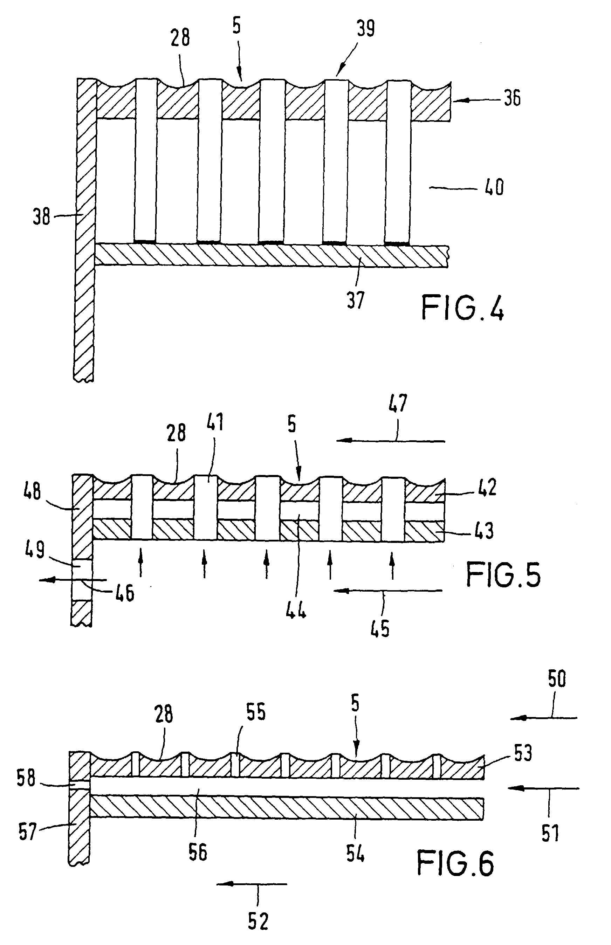

Fig. 4 zeigt eine Ausgestaltung, bei der in dem Ringraum 40 innenseitig, d. h. am unteren Ende geschlossene Kanäle 39 angeordnet sind, welche wiederum zwischen den kalottenförmigen Vertiefungen 28 in der Faserbildungszone 5 des Außenmantels 36 münden. Bei diesem Ausführungsbeispiel sind der Innenmantel 37 und die äußere Stirnscheibe 38 geschlossen. Der Ringraum 40 kann aber an einen geschlossenen Kühlwasserkreislauf angeschlossen werden.

Bei dem Ausführungsbeispiel nach Fig. 5 ist der Ringraum 44, der von dem Außenmantel 42 und dem Innenmantel 43 begrenzt ist, wieder an einen geschlossenen Kühlwasserkreislauf angeschlossen. Die Anordnung der Luftkanäle 41 entspricht im wesentlichen der Anordnung der Luftkanäle 33 gemäß Fig. 3. In diesem Falle ist jedoch die Stirnwand 48 im äußeren Bereich des Innenraumes des Rotors mit zahlreichen auf dem Umfang verteilten Öffnungen 49 versehen, so daß in Richtung der Pfeile 45 und 46 Transport- und Kühlluft durch den Innenraum geleitet werden kann. Außerdem kann, wie vereinfacht mit dem Pfeil 47 dargestellt, mit Abstand von dem Außenmantel 42 über den gesamten Umfang der Faserbildungszone 5 ein axialer Transportluftstrom zugeführt werden.

Bei dem Ausführungsbeispiel gemäß Fig. 6 ist der Ringraum 56, der wieder zwischen einem Außenmantel 53 und einem Innenmantel 54 gebildet ist, mit einem Kühlwasseranschluß mit Strömungsrichtung 51 versehen. Der Außenmantel 53 weist Dampfaustrittsöffnungen 55 auf, welche wieder zwischen den kalottenförmigen Vertiefungen 28 in der Faserbildungszone münden. Entsprechend Fig. 1 ist die Stirnwand 57 mit Öffnungen 58 versehen, so daß sich ein offenes Kühlwassersystem ergibt. Mit dem Pfeil 52 ist vereinfacht dargestellt, daß wieder durch den Innenraum Transport- und Kühlluft geleitet werden kann. Entsprechend Fig. 5 kann auch hier wieder auf dem Umfang in axialer Richtung, wie mit dem Pfeil 50 angedeutet ist, Transportluft zugeleitet werden, welche die gebildeten Mineralfasern umringt, so daß diese, wie üblich, gesammelt und anschließend weiterverarbeitet werden können.

Ganz allgemein sei hier noch folgendes ausgeführt. Das Ablösen der Schmelze und damit die beginnende Faserbildung können dadurch wirksam unterstützt werden, daß durch die erläuterten öffnungen bzw. Kanäle Druckluft nach außen geführt wird oder daß Wasserdampf durch diese Öffnungen oder Kanäle nach außen austritt. Bei entsprechendem vorgegebenem Druck lassen sich die Durchmesser der Kanäle und auch der kalottenförmigen Vertiefungen deutlich verringern bzw. ihre Anzahl pro Flächeneinheit in gewünschter Weise erhöhen. Das führt zu einer Leistungssteigerung im Bereich der Faserbildungszone. Die Durchmesser der Öffnungen bzw. Kanäle lassen sich bis hin zu feinen Kapillaren verringern. Insbesondere bei hohen Viskositäten der Schmelze ist es auch möglich, das Material des Außenmantels zwischen den kalottenförmigen Vertiefungen 28, insbesondere an den Rändern dieser Vertiefungen, z. B. durch Sintermetalltechnik oder eine gezielt ausgelöste Spannungsrißkorrosion, für Luft, Wasserdampf oder Wasser durchlässig zu gestalten.

Die Fig. 7 bis 9 veranschaulichen ein weiteres Ausführungsbeispiel der erfindungsgemäßen Vorrichtung. Der Zeichnungsbeschreibung dieses Ausführungsbeispieles seien aber folgende allgemeine Erläuterungen vorausgeschickt.

Allen bisher bekannten Zerfaserungsaggregaten ist gemeinsam, daß ihr Antrieb durch Elektromotoren über Getriebe erfolgt. Eine Steigerung der Umdrehungszahlen und damit eine Erhöhung der Zentrifugalkraft zwecks Erhöhung der Leistung oder zur Erreichung eines höheren Dispersionsgrades ist nur mit erheblichem Aufwand möglich. Diese bekannten Antriebe und insbesondere die meist mit der Antriebsachse des betreffendes Rotors verbundenen Getriebe, stellen strömungstechnisch zumeist ungünstige Hindernisse im Hinblick auf die Gleichmäßigkeit der Faserbildung und des Abtransports der gebildeten Fasern dar, und zwar Hindernisse für die erforderliche Transportluftströmung.

Erfindungsgemäß wird daher vorgeschlagen, daß der Rotor 1 an dem einen Ende im Bereich der Aufgabezone 3 antriebsmäßig mit einer Gasturbine 61 verbunden ist.

Durch die Verwendung des Gasturbinen-Prinzips können strömungstechnik optimierte und in einem weiten Bereich variable Zerfaserungsvorrichtungen hergestellt und dementsprechend das Faserspektrum und die Leistung wesentlich erhöht und dazu auch noch variiert werden.

Die Verbindung des Rotors mit der Gasturbine erfolgt vorteilhafterweise im Schubbereich der Gasturbine mit einer Anordnung auf deren Zentralwelle. Bei Verwendung einer entsprechenden langen Zentralwelle ist es auch möglich, mehrere Rotoren hintereinander auf der Zentralwelle anzuordnen.

Die für den vorliegenden Zweck verwendbare Gasturbine entspricht in ihrem Aufbau den in der Luftfahrt üblichen Triebwerken, jedoch mit den für einen stationären Betrieb erforderlichen Veränderungen bzw. Vereinfachungen sowie mit den erforderlichen Hilfseinrichtungen.

Vorteilhafterweise ist die Gasturbine 61 mit einem Einlaufdiffusor, einem Verdichter, einer Brennkammer, einem Turbinenteil für den Verdichterantrieb sowie mit einer Schubdüse ausgestattet.

Zu dem hier angestrebten Zweck können auch Propellerturbinen-Luftstrahltriebwerke Verwendung finden, die zweierlei bewirken, nämlich einmal eine hohe Umdrehungszahl der Rotorachse erzeugen und zum anderen eine hohe Transportluftgeschwindigkeit. Es können damit Umdrehungszahlen zwischen etwa 10.000 U/min. bis etwa 30.000 U/min. erreicht und je nach Anwendungsfall gewählt werden. Der auf den Umfang des Rotors im Bereich der Faserbildungszone geleitete Schub der Gasturbine führt zu einer Luftgeschwindigkeit von etwa 150 m/s bis 330 m/s. Es versteht sich, daß die Gasturbine im Unterschallbereich betrieben wird. Vorteilhafterweise ist die Gasturbine so angeordnet, daß sich auf ihrer Anströmseite ein Propeller befindet, der einer im Umfang des nachgeordneten Rotors verbesserten Steuerung der Luft für den Abtransport der gebildeten Mineralfasern dient. Das gilt insbesondere für die Fälle, in denen hinter der Gasturbine mehrere Rotoren mit Faserbildungszonen angeordnet sind.

Im Rahmen der Erfindung wird ferner vorgeschlagen, eine separate Aufgabe der Verbrennungsluft in den Einlaufdiffusor der Gasturbine vorzunehmen, während die Transportluft umfangsmäßig über eine zweite Anlaufdüsenkonstruktion aufgegeben wird. Als Transportluft wird vorzugsweise von anorganischen Partikel oder sonstigen Stoffen gereinigte und gekühlte Luft verwendet, und zwar Luft aus der Sammelkammer, in welcher die Mineralfasern gesammelt werden. Damit ergibt sich für die Transportluft ein Teilkreislauf.

Im Rahmen der Erfindung wird weiterhin vorgeschlagen, zwischen der ringförmigen Schubdüse der Gasturbine einerseits und der Faserbildungszone des Rotors andererseits ringförmige Leitelemente anzuordnen, die eine Steuerung der Luftbewegung in dem erforderlichen Abstand achsparallel zu der äußeren Oberfläche der Faserbildungszone erlauben. Weiterhin ist es von Vorteil, einen Teil der von der Gasturbine erzeugten Luftmenge, wie oben bereits beschrieben, durch den Innenraum des Rotors zu leiten, einmal um den Rotor zu kühlen und um eine Rückströmung hinter dem Rotor zu vermeiden.

Fig. 7 ist eine Prinzipdarstellung mit einem vertikal geschnittenen Rotor 1 mit Aufgabezone 3, Verteilungszone 4 und Faserbildungszone 5 sowie einem Zentralrohr 7. In Richtung des Pfeiles 60 wird ein Schmelzestrahl 59 auf die Aufgabezone 3 geleitet. Insoweit gelten die Ausführungen zu den oben erläuterten Ausführungsbeispielen. Beim Ausführungsbeispiel nach Fig. 7 ist der Rotor an eine im Prinzip dargestellte Gasturbine 61 mit Verbrennungsluftzuführung 62 angeschlossen.

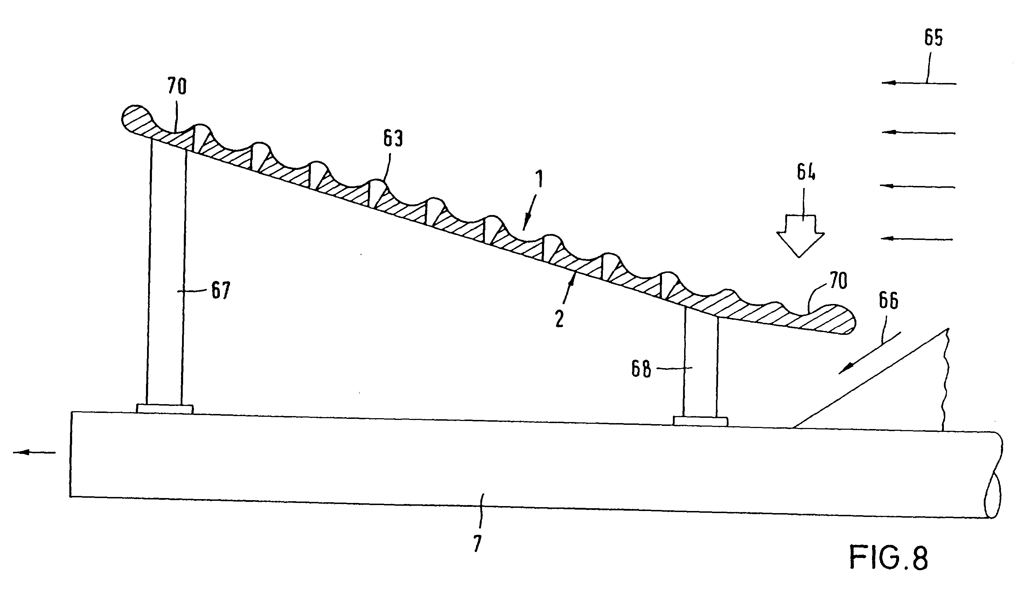

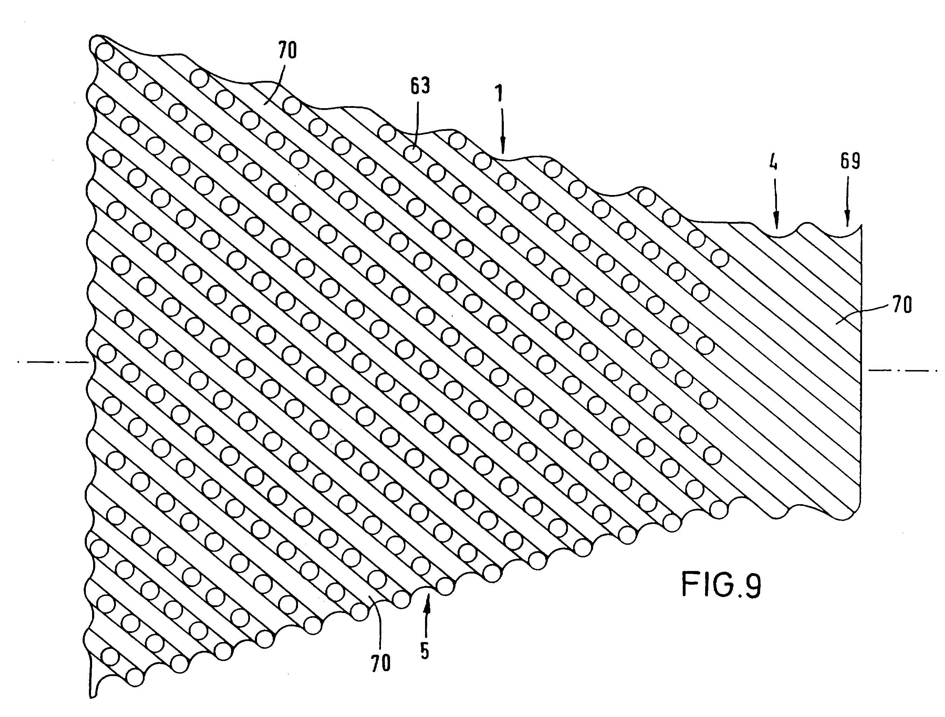

Fig. 8 zeigt einen Teilvertikalschnitt zu dem Rotor 1 gemäß Fig. 7 in vergrößertem Maßstab. Der Rotor 1 ist kegelstumpfförmig ausgebildet und sein Außenmantel 2 mittels Speichen 67 und 68 mit dem Zentralrohr 7 verbunden. Das rechte Ende des Zentralrohres 7 ist gemäß Fig. 7 mit der Gasturbine 61 verbunden. Der Außenmantel 2 ist im Bereich der Faserbildungszone auf dem gesamten Umfang mit einer großen Anzahl Kanälen 63 versehen, die nach außen hin konisch erweitert sind. Die Kanäle 63 können wieder, wie oben mehrfach beschrieben, zwischen kalottenförmigen Vertiefungen münden. Über die Löcher bzw. die Kanäle 63 wird wieder die Faserbildung ausgelöst. Die Löcher bzw. Kanäle 63 münden, wie Fig. 8 zeigt, in kuppelförmig nach außen gewölbten Kalotten. Ferner sind die Kanäle und die Kalotten gemäß Fig. 9 schraubenförmig oder spiralförmig auf der Oberfläche angeordnet. Der Anstieg der Schraubenlinien ist abhängig von der gewünschten Leistung, der erlaubten Umdrehungszahl und insbesondere der Viskosität der Schmelze. Bei längeren Rotoren wird die Größe der Öffnungen bzw. Kanäle mit zunehmendem Abstand von der Aufgabezone, also mit steigener Viskosität der Schmelze, vergrößert. Die Öffnungen können in regelmäßigen Abständen aneinandergereiht werden oder in Gruppen, um Zwischenräumne für den Verlauf der Schmelze zu schaffen.

Zwischen den Reihen der Öffnungen bzw. Kanäle befinden sich muldenförmige oder rinnenförmige Vertiefungen bzw. Führungsrinnen 70, die der Verteilung der Schmelze auf der Oberfläche dienen. Sinngemäß können auch kalottenförmige Vertiefungen schraubenförmig hintereinander angeordnet werden. In jedem Falle wird durch diese Gestaltung der Oberfläche eine gleichmäßige Verteilung der Schmelze erreicht und eine unerwünschte Faserbildung in den Bereichen der Führungsrinnen 70 bzw. der kalottenförmigen Vertiefungen vermieden. In Fig. 8 ist die Schmelzaufgabe durch den Pfeil 64 und in Fig. 9 durch den Pfeil 69 angedeutet. Die Pfeile 65 und 66 verdeutlichen die Luftströmungen, die von der Gasturbine ausgehen.

## Patentansprüche

1. Vorrichtung zum Erzeugen von Mineralfasern aus einer Schmelze mit einem um eine Horizontale drehenden Rotor (1), auf dessen äußere Oberfläche die Schmelze aufgegeben wird, wobei der Rotor (1) in axialer Richtung drei nebeneinander liegende Zonen aufweist, eine Aufgabezone (3) für die Schmelze, eine Verteilungszone (4) und eine auf dem Umfang mit Öffnungen (6) versehene Faserbildungszone (5), dadurch gekennzeichnet, daß der Durchmesser des Rotors (1) von der Aufgabezone (3) über die Verteilungszone (4) bis zur Faserbildungszone (5) vergrößert ist.

2. Vorrichtung nach Anspruch 1, dadurch gekennzeichnet, daß der Umfang des Rotors (1) flaschenförmig gestaltet ist, so daß der Flaschenhals die Aufgabezone (3) bildet, an die sich die Verteilungszone (4) anschließt und der Flaschenkörper die Faserbildungszone (5) aufweist.

3. Vorrichtung nach Anspruch 1, dadurch gekennzeichnet, daß der Rotor (1) in axialer Richtung von der Aufgabezone (3) bis zum Ende der Faserbildungszone (5) kegelstumpfförmig erweitert ist.

4. Vorrichtung nach einem der Ansprüche 1 bis 3, dadurch gekennzeichnet, daß der Rotor (1) auf der Oberfläche spiralförmige Führungsrinnen (25, 70) aufweist.

5. Vorrichtung nach Anspruch 4, dadurch gekennzeichnet, daß der Anstieg der Führungsrinnen (25, 70) etwa 40° bis 60° zur Rotorachse beträgt.

6. Vorrichtung nach Anspruch 4 oder 5, dadurch gekennzeichnet, daß die Führungsrinnen (25, 70) und die zwischen den Führungsrinnen (25, 70) gebildeten Stege (26) zueinander abgerundet sind.

7. Vorrichtung nach einem der vorhergehenden Ansprüche, dadurch gekennzeichnet, daß die Faserbildungszone (5) zwischen den Öffnungen (6) kalottenförmige Vertiefungen (28) aufweist.

8. Vorrichtung nach Anspruch 7, dadurch gekennzeichnet, daß die kalottenförmigen Vertiefungen (28) unterschiedliche Tiefen derart aufweisen, daß sie mit größeren Abständen von der Aufgabezone (3) zunehmend flacher gestaltet sind.

9. Vorrichtung nach einem der vorhergehenden Ansprüche, dadurch gekennzeichnet, daß der Durchmesser der Öffnungen (6) bis zu etwa 2 bis 3 mm beträgt.

10. Vorrichtung nach einem der vorhergehenden Ansprüche, dadurch gekennzeichnet, daß der Rotor (1) mit seinem Außenmantel (2) auf einem Zentralrohr (7) befestigt ist.

11. Vorrichtung nach Anspruch 10, dadurch gekennzeichnet, daß der Rotor (1) einen Innenmantel (12) aufweist, welcher mit dem Außenmantel (2) einen Ringraum (17) begrenzt.

12. Vorrichtung nach Anspruch 11, dadurch gekennzeichnet, daß der Ringraum (17) über mindestens ein Radialrohr (15) mit dem Zentralrohr (7) verbunden ist.

13. Vorrichtung nach Anspruch 11 oder 12, dadurch gekennzeichnet, daß der Außenmantel (2) und der Innenmantel (12) mittels Stirnscheiben (8, 10) mit dem Zentralrohr (7) verbunden sind, und daß die Stirnscheibe (8) nahe der Aufgabezone (3) mit mindestens einer Lufteintrittsöffnung (9) und die Stirnscheibe (10) am Ende der Faserbildungszone (5) mit mindestens einer Luftaustrittsöffnung (11) versehen sind.

14. Vorrichtung nach Anspruch 13, dadurch gekennzeichnet, daß die Stirnscheibe (10) am Ende der Faserbildungszone (5) im Bereich des Ringraumes (17) mit auf dem Umfang des Ringraumes verteilten Auslaßöffnungen (18) versehen ist.

15. Vorrichtung nach einem der Ansprüche 11 bis 14, dadurch gekennzeichnet, daß der Ringraum (17) wahlweise an einen offenen oder geschlossenen Kühlwasserkreislauf angeschlossen ist.

16. Vorrichtung nach einem der Ansprüche 11 bis 15, dadurch gekennzeichnet, daß der Innenraum (71) des Innenmantels (12, 32, 43) über Luftkanäle (33, 41) mit dem Außenmantel (2, 42, 53) verbunden ist, daß die Luftkanäle (33, 41) zwischen den kalottenförmigen Vertiefungen (28) in der Faserbildungszone (5) münden, und daß der Ringraum (44) an einen geschlossenen Kühlwasserkreislauf angeschlossen ist.

17. Vorrichtung nach Anspruch 11, dadurch gekennzeichnet, daß in dem Ringraum (40) innenseitig geschlossene Kanäle (39) angeordnet sind, welche zwischen den kalottenförmigen Vertiefungen (28) in der Faserbildungszone (5) des Außenmantels (36) münden.

18. Vorrichtung nach Anspruch 11, dadurch gekennzeichnet, daß der Ringraum (56) mit einem Kühlwasseranschluß versehen ist, und daß der Außenmantel (53) Dampfaustrittsöffnungen (55) aufweist, welche zwischen den kalottenförmigen Vertiefungen (28) in der Faserbildungszone (5) münden.

19. Vorrichtung nach Anspruch 1, dadurch gekennzeichnet, daß der Rotor (1) an dem einen Ende im Bereich der Aufgabezone (3) antriebsmäßig mit einer Gasturbine (61) verbunden ist.

20. Vorrichtung nach Anspruch 19, dadurch gekennzeichnet, daß die Gasturbine (61) mit einem Einlaufdiffusor, einem Verdichter, einer Brennkammer, einem Turbinenteil und einer Schubdüse ausgestattet ist.

21. Vorrichtung nach Anspruch 19 oder 20, dadurch gekennzeichnet, daß der kegelstumpfförmige Rotor (1) mit Speichen (67, 68) mit dem Zentralrohr (7) und das eine Ende des Zentralrohres (7) mit der Gasturbine (61) verbunden sind.

## Claims

1. Device for the production of mineral fibers from a melt, comprising a rotor (1) rotating about a horizontal line, with the melt being fed onto the outer upper surface of the rotor, said rotor (1) in the axial direction having three adjacent zones, a feeding zone (3) for the melt, a distributing zone (4) and a fiber forming zone (5) with circumferentially disposed openings (6), characterized in that the diameter of the rotor (1) is increased from the feeding zone (3) over the distributing zone (4) to the fiber forming zone (5).

2. Device according to claim 1, characterized in that the circumference of the rotor (1) is bottle-shaped so that the bottle neck forms the feeding zone (3) which is followed by the distributing zone (4), and so that the body of the bottle includes the fiber forming zone (5).

3. Device according to claim 1, characterized in that the rotor (1) is enlarged in the fashion of a truncated cone in the axial direction from the feeding zone (3) up to the end of the fiber forming zone (5).

4. Device according to any one of the claims 1 to 3, characterized in that the rotor (1) includes spiral guide grooves (25, 70) on the surface thereof.

5. Device according to claim 4, characterized in that the ascending slope of the guide grooves (25, 70) is approximately 40° to 60° relative to the rotor axis.

6. Device according to claim 4 or 5, characterized in that the guide grooves (25, 70) and the webs (26) formed between the guide grooves (25, 70) are rounded relative to each other.

7. Device according to any one of the preceding claims, characterized in that the fiber forming zone (5) includes calotte-shaped recesses (28) between the openings (6).

8. Device according to claim 7, characterized in that the calotte-shaped recesses (28) have different depths so that with greater distances from the feeding zone (3) the same are formed to be increasingly shallow.

9. Device according to any one of the preceding claims, characterized in that diameter of the openings (6) is up to approximately 2 to 3 mm.

10. Device according to any one of the preceding claims, characterized in that the rotor (1) is fixed onto a central tube (7) by its outer casing (2).

11. Device according to claim 10, characterized in that the rotor (1) includes an inner casing (12) which together with the outer casing (2) defines an annular space (17).

12. Device according to claim 11, characterized in that the annular space (17) is connected to the central tube (7) through at least one radial tube (15).

13. Device according to claim 11 or 12, characterized in that the outer casing (2) and the inner casing (12) are connected to the central tube (7) by means of face disks (8, 10), and that the face disk (8) near the feeding zone (3) is provided with at least one air inlet opening (9), and the face disk (10) at the end of the fiber forming zone (5) is provided with at lest one air outlet opening (11).

14. Device according to claim 13, characterized in that the face disk (10) at the end of the fiber forming zone (5) in the area of the annular space (17) is provided with outlet openings (18) distributed over the circumference of the annular space.

15. Device according to any one of the claims 11 to 14, characterized in that the annular space (17) is selectively connected to an open or closed cooling water circuit.

16. Device according to any one of the claims 11 to 15, characterized in that the interior (71) of the inner casing (12, 32, 43) is connected to the outer casing (2, 42, 53) through air ducts (33, 41), that the air ducts (33, 41) lead between the calotte-shaped recesses (28) into the fiber forming zone (5), and that the annular space (44) is connected to a closed cooling water circuit.

17. Device according to claim 11, characterized in that in the annular space (40) ducts (39) are arranged which are closed on the inner side and lead between the calotte-shaped recesses (28) into the fiber forming zone (5) of the outer casing (36).

18. Device according to claim 11, characterized in that the annular space (56) is provided with a cooling water connection, and that the outer casing (53) includes steam outlet openings (55) which lead between the calotte-shaped recesses (28) into the fiber forming zone (5).

19. Device according to claim 1, characterized in that the rotor (1) on one end in the area of the feeding zone (3) is drivingly connected to a gas turbine (61).

20. Device according to claim 19, characterized in that the gas turbine (61) is equipped with an inflow diffuser, a compressor, a combustion chamber, a turbine part and a propelling nozzle.

21. Device according to claim 19 or 20, characterized in that the rotor (1) in the form of a truncated cone is connected by spokes (67, 68) to the central tube (7), and the one end of the central tube (7) to the gas turbine (61).

## Revendications

1. Dispositif pour produire des fibres minérales à partir d'une matière en fusion avec un rotor (1) qui tourne autour d'une horizontale, sur la surface extérieure duquel la matière en fusion est amenée, le rotor (1) présentant dans le sens axial trois zones situées l'une à côté de l'autre, une zone d'alimentation (3) pour la matière en fusion, une zone de répartition (4) et une zone de formation de fibres (5) pourvue d'ouvertures (6) sur la périphérie, caractérisé en ce que le diamètre du rotor (1) est agrandi de la zone d'alimentation (3) vers la zone de formation de fibres (5) en passant par la zone de répartition (4).

2. Dispositif selon la revendication 1, caractérisé en ce que la périphérie du rotor (1) est configurée en forme de bouteille si bien que le col de la bouteille forme la zone d'alimentation (3) à laquelle se rattache la zone de répartition (4) et le corps de la bouteille présente la zone de formation des fibres (5).

3. Dispositif selon la revendication 1, caractérisé en ce que le rotor (1) est élargi en forme de cône tronqué dans le sens axial de la zone d'alimentation (3) jusqu'à l'extrémité de la zone de formation de fibres (5).

4. Dispositif selon l'une des revendications 1 à 3, caractérisé en ce que le rotor (1) présente sur la surface des goulottes de guidage (25, 70) en forme de spirale.

5. Dispositif selon la revendication 4, caractérisé en ce que la montée des goulottes de guidage (25, 70) est d'environ 40° à 60° jusqu'à l'axe du rotor.

6. Dispositif selon la revendication 4 ou 5, caractérisé en ce que les goulottes de guidage (25, 70) et les traverses (26) formées entres les goulottes de guidage (25, 70) sont arrondies les unes par rapport aux autres.

7. Dispositif selon l'une des revendications précédentes, caractérisé en ce que la zone de formation de fibres (5) présente des évidements en forme de calottes (28) entre les ouvertures (6).

8. Dispositif selon la revendication 7, caractérisé en ce que les évidements en forme de calottes (28) présentent différentes profondeurs de telle manière qu'ils sont configurés de plus en plus plats lorsque les écarts par rapport à la zone d'alimentation (3) grandissent.

9. Dispositif selon l'une des revendications précédentes, caractérisé en ce que le diamètre des ouvertures (6) va jusqu'à 2 à 3 mm.

10. Dispositif selon l'une des revendications précédentes, caractérisé en ce que le rotor (1) est fixé avec son enveloppe extérieure (2) sur un tube central (7).

11. Dispositif selon la revendication 10, caractérisé en ce que le rotor (1) présente une enveloppe intérieure (12) qui limite un espace annulaire (17) avec l'enveloppe extérieure (2).

12. Dispositif selon la revendication 11, caractérisé en ce que l'espace annulaire (17) est relié au tube central (7) par au moins un tube radial (15).

13. Dispositif selon la revendication 11 ou 12, caractérisé en ce que l'enveloppe extérieure (2) et l'enveloppe intérieure (12) sont reliées au tube central (7) au moyen de rondelles frontales (8, 10) et que la rondelle frontale (8) est pourvue d'au moins une ouverture d'entrée d'air (9) près de la zone d'alimentation (3) et la rondelle frontale (10) d'au moins une ouverture de sortie d'air (11) l'extrémité de la zone de formation de fibres (5).

14. Dispositif selon la revendication 13, caractérisé en ce que la rondelle frontale (10) est pourvue, à l'extrémité de la zone de formation des fibres (5) dans la zone de l'espace annulaire (17), d'ouvertures d'évacuation (18) réparties sur la périphérie de l'espace annulaire.

15. Dispositif selon l'une des revendications 11 à 14, caractérisé en ce que l'espace annulaire (17) est raccordé au choix à un circuit d'eau de refroidissement ouvert ou fermé.

16. Dispositif selon l'une des revendications 11 à 15, caractérisé en ce que l'espace intérieur (71) de l'enveloppe intérieure (12, 32, 43) est relié à l'enveloppe extérieure (2, 42, 53) par des conduits d'air (33, 41), que les conduits d'air (33, 41) aboutissent entre les évidements en forme de calotte (28) dans la zone de formation de fibres (5) et que l'espace annulaire (44) est raccordé à un circuit d'eau de refroidissement fermé.

17. Dispositif selon la revendication 11, caractérisé en ce que des conduits (39) fermés du côté intérieur sont placés dans l'espace annulaire (40), conduits qui aboutissent entre les évidements en forme de calotte (28) dans la zone de formation de fibres (5) de l'enveloppe extérieure (36).

18. Dispositif selon la revendication 11, caractérisé en ce que l'espace annulaire (56) est pourvu d'un raccord d'eau de refroidissement et que l'enveloppe extérieure (53) présente des ouvertures de sortie de la vapeur (55) qui aboutissent entre les évidements en forme de calotte (28) dans la zone de formation de fibres (5).

19. Dispositif selon la revendication 1, caractérisé en ce que le rotor (1) est relié pour ce qui est de l'entraînement à une turbine à gaz (61) à l'une des extrémités dans la zone de la zone d'alimentation (3).

20. Dispositif selon la revendication 19, caractérisé en ce que la turbine à gaz (61) est équipée d'un diffuseur d'entrée, d'un compresseur, d'une chambre de combustion, d'une partie turbine et d'une tuyère de poussée.

21. Dispositif selon la revendication 19 ou 20, caractérisé en ce que le rotor en forme de cône tronqué (1) est relié avec des rayons (67, 68) au tube central (7) et l'une des extrémités du tube central (7) à la turbine à gaz (61).
